# EUROPEAN PATENT SPECIFICATION

(11) **EP 1 380 212 B1**
(45) Date of publication and mention of the grant of the patent: **26.09.2007**
(21) Application number: 02718522.2
(22) Date of filing: 10.04.2002
(51) Int. Cl.: A22C 13/00

(54) **CASING FILM FOR FOOD**
VERPACKUNGSFOLIE FÜR LEBENSMITTEL
FILM D'EMBALLAGE POUR DES ALIMENTS

(30) Priority: 17.04.2001 JP 2001118452
(43) Date of publication of application: 14.01.2004
(73) Proprietor: Gunze Kobunshi Corporation, Isehara-shi, Kanagawa 259-1132 (JP); GUNZE LIMITED, Ayabe-shi, Kyoto 623-8511 (JP)
(72) Inventor: MORI, Nobuyuki, Hadano-shi, Kanagawa 257-0006 (JP); ARAI, Ichiro, Isehara-shi, Kanagawa 259-1133 (JP)
(74) Representative: HOFFMANN EITLE
(86) International application number: PCT/JP2002/003583
(87) International publication number: WO 2002/085129

(56) References cited:
- JP-A- 2 167 221
- JP-A- 6 226 932
- JP-A- 9 003 348
- JP-A- 11 164 648
- JP-A- 56 151 755

## Description

### TECHNICAL FIELD

The present invention relates to a casing film for food that is used for packing and smoking processed meat products, such as ham and sausage, and dairy products, such as cheese, as well as to smoked food products that are packed by using the casing film and that are subjected to smoking treatment. Furthermore, the present invention relates to a casing film for food that is used for processing dry sausage (mortadella) or dry ham by moderately expelling water from inside of the ham or sausage without subjecting to a smoking treatment, as well as to dry sausage (mortadella) and dry ham packed by using the casing film for food.

### BACKGROUND ART

To perform cooking by smoking treatment or thermal treatment of processed meat products, such as ham and sausage, cheese and the like, natural casings such as animal intestine, viscose-based fibrous casings, and collagen casing made from collagen have been conventionally used. These casings are advantageous in that they can be subjected to smoking treatment and its effect is very large.

However, they have a number of drawbacks, such as heterogeneity of natural casings in shape and strength, extreme difficulty in procurement of large amounts of raw material in a short period of time, spotted differences in strength of a casing membrane and presence of very weak portions thereof, susceptibility to rupture of casings during stuffing that renders , in some cases, the stuffing difficult, and poor stuffing efficiencies.

Other drawbacks of fibrous and collagen casings include a large reduction in weight of filler material due to excessive water-permeability of the casings, problems of decomposition of filler and development of mold during long term storage due to excessive oxygen-permeability, and requirement of pre-treatment such as soaking in water before use due to bad smell and hard tactile feeling.

By contrast, polyamide film, such as polycapramide and polyhexamethylene adipamide,that is used as synthesized plastic casings has a number of advantages such as: some effect of smoking treatment under high humidity conditions, high tensile rupture strength, high impact strength, high dimensional stability, high oxygen blocking ability, and long-term storage stability of filling material. However, smoking effect of this type of film is very low, compared to that of fibrous casings, and is inadequate as casing for smoking.

The present invention has been made to overcome the above-mentioned drawbacks. Thus, objectives of the present invention are to provide thermoshrinkable casing film for smoking which can be subjected to equivalent smoking treatment as is provided with natural casing and fibrous casing and which may provide good scent, color and flavor of smoked food, and that is moderately permeable to water vapor and, on the contrary, moderately impermeable to oxygen as well as with high strength, and to provide smoked food packed by using the casing film.

Further objectives of the present invention are to provide food casing film which may be applied to unsmoked dry sausage or dry ham, and that is moderately permeable to water vapor and moderately impermeable to oxygen, and to provide a food product packed by using the casing film.

The present inventors have made extensive studies to achieve the above-mentioned objectives, and found that food casing film having moderate permeability to water vapor and moderate impermeability to oxygen, which film, at the same time, can be subjected to smoking treatment and may retain good scent, color and flavor of smoked food, may be obtained by mixing thermoplastic resin with polyvinylpyrrolidone, thereby achieving the present invention.

### DISCLOSURE OF THE INVENTION

The present invention is directed to a casing film for food, which comprises a mixture of polyvinylpyrrolidone and polyamide resin. The mixing ratio of the polyamide resin to polyvinylpyrrolidone is preferably 50 to 99:50 to 1 by weight, and more preferably 80 to 99:20 to 1 by weight. Preferably, the polyamide resin is nylon 6 or copolymer resin of nylon 6 and nylon 6.6. The food casing film may be used for smoked food products and for dry sausage (mortadella) or dry ham. The present invention further provides food products packed by using the food casing film.

The major components of smoke comprise phenols, alcohols, organic acids and carbonyl compounds, and these compounds are hydrophilic. Thus, the casing is required to be characterized by its hydrophilicity, plasticity with water and facilitated permeability to water and water vapor, in order for components of the smoke to effectively permeate through the casing.

It is necessary to transmit a larger amount of water containing scent and flavor components of the smoke through the casing for more effective smoking treatment of cased filler. For this purpose, it is important for the surface of the casing to absorb and lyse a larger amount of water containing the scent and flavor components of the smoke and to diffuse the water into the inner surface of the film more rapidly.

On the contrary, if the casing has an excessive permeability to water and water vapor, excessive amount of water contained in the cased filler may be expelled to the outside of the filling of the casing during a series of steps including smoking, cooking and cooling. This results in reduction in the weight of the filling and occurrence of wrinkles on the final packaged products, thereby further generating a problem of yield reduction.

The present invention is directed to food casing film, which comprises a mixture of polyvinylpyrrolidone and polyamide resin. The film is moderately permeable to water vapor and moderately impermeable to oxygen, and, at the same time, it allows water containing the scent and flavor of smoked food to be absorbed and lysed. Thus, the film is suitable for smoking treatment and has sufficient strength to undergo processing such as clipping, shirring, and casing such as stuffing.

For dry sausage or dry ham that is not subjected to smoking treatment, it is important to expel an adequate amount of internal water. For this purpose, a casing is required which has moderate permeability to water vapor and moderate impermeability to oxygen. Casing film comprising a mixture of polyvinylpyrrolidone and polyamide resin satisfies this requirement.

The mixing ratio of the polyamide resin to polyvinylpyrrolidone is preferably 50 to 99:50 to 1 by weight, and more preferably 80 to 99:20 to 1 by weight. Preferably, the casing film is monolayer film with a thickness of 5 to 90 micrometers.

The film of this composition shows moderate permeability to water vapor but moderate impermeability to oxygen. When used for packing the content, the film allows for moderate discharge of internal water. Also, in the smoking treatment, the film allows for absorption, lysis and filtration of water containing the scent and flavor of smoked food without reducing the weight of the filling or generating wrinkles on the final packaged products. Moreover, the film has improved properties including high tensile rupture strength, high impact strength, high dimensional stability, and high oxygen blocking ability.

The polyvinylpyrrolidone used in the present invention is a cross-linked polymer of N-vinylpyrrolidone, which is able to absorb water from 1 time up to 30 times its own weight and, in turn, to discharge absorbed water. This polymer also shows stable water absorption from various concentrations of aqueous salt solution in a wide range of pH levels.

An appropriate amount of salt is added to the filling of casing, and the atmospheric environment for smoking treatment may be acidic or alkaline depending on the treatment conditions. For this reason, the above-mentioned properties of polyvinylpyrrolidone are important and essential for the present invention. Thus, water absorbent polyacrylic acid polymers are not suitable for smoking treatment due to remarkable reduction of the water-absorbing capacity in the aqueous salt solution or non-neutral environment.

Preferably, nylon 6, copolymer nylon consisting of nylon 6 and nylon 6.6, nylon 11, nylon 12, copolymer nylon consisting of nylon 6 and nylon 12, and a mixture thereof may be used as the polyamide resin. Among them, nylon 6 or copolymer nylon consisting of nylon 6 and nylon 6.6 is preferred.

The casing film for smoked food products of the present invention may be obtained by biaxially drawing a mixture of polyvinylpyrrolidone and polyamide resin to approximately 1.5 to 3. 5 times longer in both longitudinal and lateral directions after, for example, melting and extruding the mixture. The casing film for smoked food products thus obtained is flexible and soft to the touch.

Also, the casing film has the property of contracting by 10 to 30% in both longitudinal and lateral directions when it is heat treated, for example, soaked in water at 95°C for 30 seconds . Thus, the casing may stay on the filling tightly even after the smoked product is cooled, thereby providing a final packaged product without wrinkles and, in stead, with tight appearance.

To produce the smoked food product of the present invention, food is stuffed into the tubular casing described above and subjected to smoking treatment using a conventional method. The temperature for smoking is 20 to 100°C, preferably 50 to 90°C. This smoking treatment may be performed in the presence of water or water vapor prior to, during or after the heat treatment. Dry heat treatment may be performed at 50 to 80°C prior to the treatment with water vapor and smoke, and then cooling by spraying cold water may be carried out after the treatment with water vapor and smoke. The temperature for smoking and heat treatment is selected so that the final product is provided with predetermined degree of cooking and scent of smoke.

The smoked food products cased using the food casing film of the present invention maintains the weight of the stuffed food after long-term storage, shows resistance to fungi such as mold, and generates no wrinkles on the packed food products after refrigeration. As a result, products with good scent and appearance may be obtained.

Since the casing film for smoked food products of the present invention is characterized by moderate permeability to water vapor and moderate impermeability to oxygen, it may also find use as casing film for dry sausage (mortadella) or dry ham. In this case, the film is not subjected to smoking treatment but is only used to expel the moisture in the meat stuffed into the casing. Thus, food is stuffed into the tubular casing described above and subjected to dry treatment using a conventional method. Preferably, the temperature for drying is 5 to 50°C.

### DETAILED DESCRIPTION OF THE PREFERRED EMBODIMENTS

The present invention is further explained with reference to the following examples.

### Example 1

A blend of 96% by weight of copolymer resin 85:15 of nylon 6 and nylon 6.6 (density: 1.14, melting point: 198°C) and 4% by weight of N-vinylpyrrolidone cross-linked polymer (PolyPlusdone XL10; ISP) was passed through a melt extruder with a mold having a round-shaped outlet port at the end of the die to mold cylindrical film, which was then drawn longitudinally to 2.5 times longer and laterally to 3.0 times longer. Thus, a casing consisting of cylindrical film with a folding width of 60 mm and a thickness of 25 micrometers was obtained. The contraction percentages of this casing were 25% in the longitudinal direction and 30% in the lateral direction, when measured after the casing was soaked in water at 95°C for 30 seconds.

### Example 2

A blend of 90% by weight of copolymer resin 85:15 of nylon 6 and nylon 6 . 6 (density: 1.14, melting point: 198°C) and 10% by weight of the N-vinylpyrrolidone cross-linked polymer, which was used in Example 1, was passed through a melt extruder with a mold having a round-shaped outlet port at the end of the die to mold cylindrical film, which was then drawn longitudinally to 2.5 times longer and laterally to 3.0 times longer. Thus, a casing consisting of cylindrical film with a folding width of 60 mm and a thickness of 25 micrometers was obtained. The contraction percentages of this casing were 25% in the longitudinal direction and 30% in the lateral direction, when measured during soaking in water at 95°C for 30 seconds.

### Example 3

A blend of 80% by weight of copolymer resin 85:15 of nylon 6 and nylon 6.6 (density: 1.14, melting point: 198°C) and 20% by weight of the N-vinylpyrrolidone cross-linked polymer, which was used in Example 1, was passed through a melt extruder with a mold having a round-shaped outlet port at the end of the die to mold cylindrical film, which was then drawn longitudinally to 2.5 times longer and laterally to 3.0 times longer. Thus, a casing consisting of cylindrical film with a folding width of 60 mm and a thickness of 25 micrometers was obtained. The contraction percentages of this casing were 20% in the longitudinal and lateral directions, when soaked in water at 95°C for 30 seconds.

### Example 4

A blend of 96% by weight of nylon 6 resin (density: 1.14, melting point: 220°C) and 4% by weight of the N-vinylpyrrolidone cross-linked polymer, which was used in Example 1, was passed through a melt extruder with a mold having a round-shaped outlet port at the end of the die to mold cylindrical film, which was then drawn longitudinally to 2.5 times longer and laterally to 3. 0 times longer. Thus, a casing consisting of cylindrical film with a folding width of 60 mm and a thickness of 25 micrometers was obtained. The contraction percentages of this casing were 15% in the longitudinal direction and 20% in the lateral direction, when soaked in water at 95°C for 30 seconds.

### Example 5

A blend of 50% by weight of copolymer resin 85:15 of nylon 6 and nylon 6.6 (density: 1.14, melting point: 198°C) and 50% by weight of the N-vinylpyrrolidone cross-linked polymer, which was used in Example 1, was passed through a melt extruder with a mold having a round-shaped outlet port at the end of the die to mold cylindrical film, which was then drawn two times longer both longitudinally and laterally. Thus, a casing consisting of cylindrical film with a folding width of 60 mm and a thickness of 25 micrometers was obtained. The contraction percentages of this casing were both 10% in the longitudinal and lateral directions, when soaked in water at 95°C for 30 seconds.

### Comparative Example 1

A commercially available fibrous casing with a folding width of 90 mm and a thickness of 85 micrometers was used.

### Comparative Example 2

Nylon 6 resin (density: 1.14, melting point: 220°C) was passed through a melt extruder with a mold having a round-shaped outlet port at the end of the die to mold cylindrical film, which was then drawn longitudinally to 2.5 times longer and laterally to 3.0 times longer. Thus, a casing consisting of cylindrical film with a folding width of 60 mm and a thickness of 25 micrometers was obtained. The contraction percentages of this casing were 15% in the longitudinal direction and 20% in the lateral direction, when soaked in water at 95°C for 30 seconds.

### Smoking Experiment

A filling material was processed by mixing 70% by weight of minced pork, 20% by weight of water, 7% by weight of starch and 3% by weight of salt and by finely cutting the mixture to form a paste. Each of the casings described in Examples 1 to 4 and Comparative Examples 1 and 2 was stuffed with 300 g of the material and was sealed with a clip, and then subjected to smoking treatment under the conditions described below.

| | | | |
|---|---|---|---|
| (1) | Aging | | 10 minutes at 50°C |
| (2) | Drying | | 20 minutes at 60°C |
| (3) | Injection of smoke | | 20 minutes at 60°C |
| (4) | Release of smoke and drying | | 20 minutes at 60°C |
| (5) | Reinjection of smoke | | 20 minutes at 60°C |
| (6) | Cooking by steam heating | | 20 minutes at 80°C |
| (7) | Cooling | sprayed with cooling water for 8 minutes at approximately 10°C | |

A filling material was processed by mixing 70% by weight of minced pork, 20% by weight of water, 7% by weight of starch and 3% by weight of salt and by finely cutting the mixture to form a paste. Each of the casings described in Example 5 was stuffed with 300 g of the material and was sealed with a clip, and then subjected to drying treatment under the conditions described below.

| | | | |
|---|---|---|---|
| (1) | Aging | | 10 minutes at 50°C |
| (2) | Drying | | 20 minutes at 60°C |
| (3) | Cooking by steam heating | | 20 minutes at 80°C |
| (4) | Cooling | sprayed with cooling water for 8 minutes at approximately 10°C | |
| (5) | Drying | let stand for two months at 15°C | |

Assuming that each grade of the scent, taste and color of the smoked food obtained using the commercially available fibrous casing described in Comparative Example 1 was 10 on a scale of 1 to 10, a plurality of experts in the art conducted sensory evaluation of the smoked food obtained using the casings described in Examples 1 to 4 and Comparative Examples 1 and 2. The results of this sensory evaluation are shown in Table 1.

**Table 1**

| Casing | Scent | Taste | Color | Depth of Smoked SKIN |
|---|---|---|---|---|
| Example 1 | 8 | 8 | 7 | 2.0 |
| Example 2 | 9 | 9 | 7 | 2.0 |
| Example 3 | 9 | 9 | 8 | 2.2 |
| Example 4 | 8 | 8 | 7 | 2.0 |
| Comparative Example 1 | 10 | 10 | 10 | 2.5 |
| Comparative Example 1 | 5 | 5 | 4 | 0.5 |

In the table, the "Depth of Smoked SKIN" refers to the thickness of the smoked color (foxing) region due to infiltration of smoke from the surface of the smoked sausages into the inside thereof (shown in mm).

As seen from Table 1, although the casings of Examples 1 to 4 showed almost equal smoking effects to that of the casing of Comparative Example 1, which is conventionally used as a casing for smoking, the casing of Comparative Example 2, which consists of only polyamide, showed insufficient smoking effect.

For each casing film described in Examples 1 to 4 and Comparative Examples 1 and 2, Table 2 shows the amounts of permeated oxygen, permeated water vapor, and weight loss of the fillings immediately after the smoking treatment using the casing film. Table 2 also shows the amounts of permeated oxygen, permeated water vapor, and weight loss of the fillings two months after the drying treatment for the casing film described in Example 5.

**Table 2**

| Casing | Amount of Permeated Oxygen [cc/m².24h. atm] | Amount of permeated Water vapor [g/m².24h] | Amount of Weight Loss (%) | | |
|---|---|---|---|---|---|
| | 23°Cx65%RH | 40°Cx90%RH | 10°C×40%RH | | 15°C×30%RH |
| | | | Immediately after smoking | 15 days later | 2 months later |
| Example 1 | 45 | 1000 | 5.7 | 11.0 | - |
| Example 2 | 45 | 1600 | 5.7 | 14.2 | - |
| Example 3 | 55 | 2000 ≦ | 6.3 | 23.0 | - |
| Example 4 | 45 | 1000 | 5.6 | 10.4 | - |
| Example 5 | 60 | 2000 ≦ | - | - | 41.0 |
| Comparative Example 1 | 2000 ≦ | 2000 ≦ | 6.7 | 42.0 | - |
| Comparative Example 2 | 38 | 400 | 2.2 | 5.4 | - |

As seen from Table 2 , the weight loss is smaller even after 15 days and the surface kept the tight appearance without wrinkles when the casings of Examples 1 to 4 and Comparative Example 2 were used. When the casing of Comparative Example 1 was used, the weight was largely reduced after 15 days and mold developed on the surface, thereby seriously reduced the commercial value. When the casing of Example 5 was used, the weight of the filling was largely reduced and fine wrinkles appeared all over the surface after two months. However, there were no mold developed on the surface, and the food product looked reddish brown and was completely dried.

Tables 1 and 2 reveal that the casings of Examples 1 to 4, which are obtained from mixtures of polyamide and polyvinylpyrrolidone, are the best casings for smoking with respect to permeations of oxygen and water vapor, and to reduction in weight. Also, they revealed that the casing of Example 5 may be applied as a casing for dry sausage.

In the present invention, there is no limitation imposed on the thickness of the film, and any size of the thickness may be selected.

### INDUSTRIAL APPLICABILITY

The present invention is directed to a casing film for food comprising a mixture of polyvinylpyrrolidone and polyamide resin. The casing film is moderately permeable to water vapor but moderately impermeable to oxygen. Moreover, the film is characterized in that it can be treated with smoke and retain the scent, color and flavor of smoked food. This casing film may find a wide variety of uses, such as for smoked food, dry ham and dry sausage.

## Claims

1. A casing film for food comprising a mixture of polyvinylpyrrolidone and polyamide resin.

2. The casing film for food according to claim 1, wherein the mixing ratio of the polyamide resin to polyvinylpyrrolidone is 50 to 99:50 to 1 by weight.

3. The casing film for food according to claim 2, wherein the mixing ratio of the polyamide resin to polyvinylpyrrolidone is 80 to 99:20 to 1 by weight.

4. The casing film according to any one of claims 1 to 3, wherein the polyamide resin is nylon 6 or copolymer resin of nylon 6 and nylon 6.6.

5. The casing film for food according to any one of claims 1 to 4, wherein the casing is used for smoking.

6. The casing film for food according to any one of claims 1 to 4, wherein the casing is used for producing dry sausage or dry ham.

7. A food product packed by using the casing film for food according to any one of claims 1 to 6.

## Patentansprüche

1. Hüllfolie für Lebensmittel umfassend eine Mischung aus Polyvinylpyrrolidon und Polyamidharz.

2. Hüllfolie für Lebensmittel gemäß Anspruch 1, worin das Mischungsverhältnis des Polyamidharzes zum Polyvinylpyrrolidon 50 bis 90:50 bis 1 pro Gewicht ist.

3. Hüllfolie für Lebensmittel gemäß Anspruch 2, worin das Mischungsverhältnis des Polyamidharzes zum Polyvinylpyrrolidon 80 bis 99:20 bis 1 pro Gewicht ist.

4. Hüllfolie gemäß einem der Ansprüche 1 bis 3, worin das Polyamidharz Nylon 6 oder ein Copolymerharz von Nylon 6 und Nylon 6.6 ist.

5. Hüllfolie für Lebensmittel gemäß einem der Ansprüche 1 bis 4, worin die Hülle beim Räuchern verwendet wird.

6. Hüllfolie für Lebensmittel gemäß einem der Ansprüche 1 bis 4, worin die Hülle zum Herstellen von getrockneter Wurst oder getrocknetem Schinken verwendet wird.

7. Lebensmittelprodukt verpackt unter Verwendung der Hüllfolie für Lebensmittel gemäß einem der Ansprüche 1 bis 6.

## Revendications

1. Film d'emballage pour des aliments comprenant un mélange de polyvinylpyrrolidone et de résine de polyamide.

2. Film d'emballage pour des aliments selon la revendication 1, dans lequel le rapport de mélange de la résine de polyamide à la polyvinylpyrrolidone est de 50 à 99:50 à 1 en poids.

3. Film d'emballage pour des aliments selon la revendication 2, dans lequel le rapport de mélange de la résine de polyamide à la polyvinylpyrrolidone est de 80 à 99:20 à 1 en poids.

4. Film d'emballage selon l'une quelconque des revendications 1 à 3, dans lequel la résine de polyamide est du nylon 6 ou une résine de copolymère de nylon 6 et de nylon 6.6.

5. Film d'emballage pour des aliments selon l'une quelconque des revendications 1 à 4, dans lequel l'emballage est utilisé pour fumer.

6. Film d'emballage pour des aliments selon l'une quelconque des revendications 1 à 4, dans lequel l'emballage est utilisé pour produire des saucisses sèches ou du jambon sec.

7. Produit alimentaire emballé à l'aide du film d'emballage pour des aliments selon l'une quelconque des revendications 1 à 6.
